# EUROPEAN PATENT SPECIFICATION

(11) **EP 3 185 378 B1**
(45) Date of publication and mention of the grant of the patent: **03.07.2019**
(21) Application number: 15834240.2
(22) Date of filing: 23.02.2015
(51) Int. Cl.: H02B 1/56, H01H 33/662, H02B 1/20, H02B 13/01

(54) **HEAT RELEASING DEVICE FOR SOLID-INSULATED DEVICE**
WÄRMEFREISETZUNGSVORRICHTUNG FÜR FESTSTOFFISOLIERTE VORRICHTUNG
DISPOSITIF DE DÉGAGEMENT DE CHALEUR POUR DISPOSITIF À ISOLATION SOLIDE

(30) Priority: 20.08.2014 JP 2014167697
(43) Date of publication of application: 28.06.2017
(73) Proprietor: Kabushiki Kaisha Toshiba, Minato-ku Tokyo 105-8001 (JP)
(72) Inventor: SATO, Junichi, Tokyo 105-8001 (JP); ASARI, Naoki, Tokyo 105-8001 (JP); MIYAUCHI, Yasuhisa, Tokyo 105-8001 (JP); KUBOTA, Nobutaka, Tokyo 105-8001 (JP)
(74) Representative: Hoffmann Eitle
(86) International application number: PCT/JP2015/000883
(87) International publication number: WO 2016/027386

(56) References cited:
- WO-A1-2011/024256
- JP-A- H10 321 096
- JP-A- 2002 271 919
- JP-A- 2003 333 715
- JP-U- S6 055 207
- US-A- 3 513 437
- US-A- 5 753 875
- US-B2- 6 897 396

## Description

### TECHNICAL FIELD

Embodiments of the present disclosure relate to a heat releasing device for a solid-insulated device which is an electric component molded by insulating material, which electric component constitutes a switchgear.

### BACKGROUND

Conventionally, in a solid-insulated device which is an electric component molded by insulating material, it is known that annular heat sinks are disposed on the outer circumference of an insulating layer. That can suppress temperature rise of the solid-insulated device. The electric component is, for example a vacuum valve or a main circuit conductor, and it constitutes a switchgear. The insulating material is, for example an epoxy resin.

It is also known that resin fins which project in a plate shape are formed outside an insulating layer. That can improve heat radiation characteristics of the solid-insulated device.

Thus, the temperature rise of the solid-insulated device can be suppressed, and that can increase its capacity. However, the heat sinks or resin fins are indirect heat radiation means via the insulating layer, and it is limited to improve heat radiation efficiency.

For this reason, a heat releasing device which can be directly connected to a main circuit of the electric component whose temperature may rise, and which can improve the heat radiation efficiency, is desired.

### PRIOR ART DOCUMENT

### PATENT DOCUMENT

Patent Document 1: Japanese Patent Laid-Open No. 2011 -200043
Patent Document 2: Japanese Patent Laid-Open No. 2012-119102

US 6897396 B2 relates to molding a plurality of vacuum valves having differing functions together with an input member and an output member en bloc in a resin layer to form a switch gear.

### SUMMARY

### PROBLEMS TO BE SOLVED BY THE INVENTION

It is an object of the present invention to provide a heat releasing device for a solid-insulated device capable of being directly connected to a main circuit of an electric component
molded by insulating material and improving heat radiation efficiency.

### MEANS FOR SOLVING THE PROBLEMS

A heat releasing device for a solid-insulated device according to embodiments of the present disclosure as defined in the appended claims is proposed to accomplish the above object. A heat releasing device for a solid-insulated device, comprising: a heat releasing member made of metal, which heat releasing member has prescribed area, a connecting conductor which is fixed to the heat releasing member and directly connected to a main circuit of the solid-insulated device, an insulating layer formed around the heat releasing member and the connecting conductor, an interface from which an end of the connecting conductor protrudes and exposes, and a grounding layer formed on the outer circumference of the insulating layer.

### BRIEF DESCRIPTION OF THE DRAWINGS

FIG. 1A is a front sectional view illustrating a configuration of a solid-insulated device.
FIG. 1B is a front sectional view illustrating a configuration of a heat releasing device according to a first embodiment, which is connected to the solid-insulated device.
FIG. 1C is a sectional view seeing from the arrow direction of the A-A line of FIG. 1B.
FIG. 2A is a top sectional view illustrating a configuration of a heat releasing device according to a second embodiment.
FIG. 2B is a front sectional view of FIG. 2A.
FIG. 3A is a top sectional view illustrating a configuration of a heat releasing device according to a third embodiment.
FIG. 3B is a front sectional view of FIG. 3A.
FIG. 4A is a top sectional view illustrating a configuration of a heat releasing device according to a fourth embodiment.
FIG. 4B is a front sectional view of FIG. 4A.
FIG. 5 is a sectional view illustrating a configuration of a heat releasing device according to a fifth embodiment.

### DETAILED DESCRIPTION

Hereafter, embodiments of the present disclosure will be described with reference to the accompanying drawings.

### First Embodiment

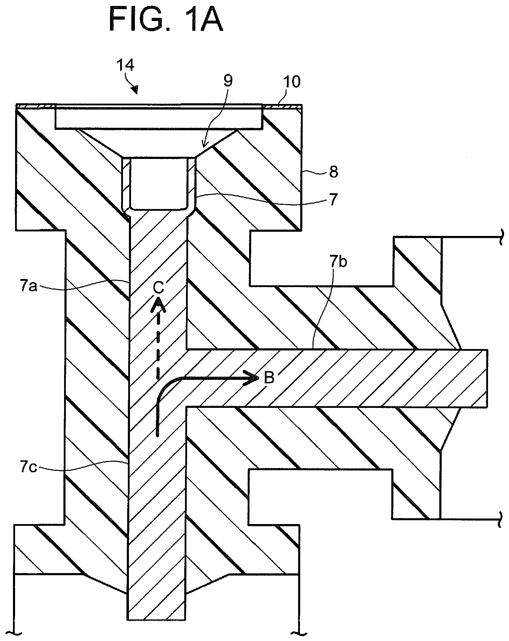

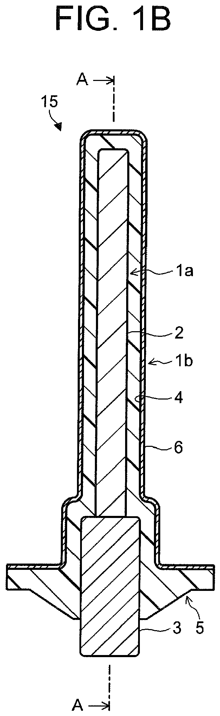

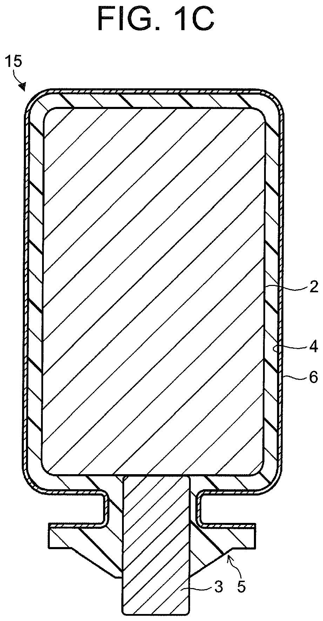

First, a solid-insulated device and a heat releasing device according to a first embodiment will be described with reference to FIGS. 1A to 1C. FIG. 1A is a front sectional view illustrating a configuration of the solid-insulated device. FIG. 1B is a front sectional view illustrating a configuration of the heat releasing device according to the first embodiment, which is connected to the solid-insulated device. FIG. 1C is a sectional view seeing from the arrow direction of the A-A line of FIG. 1B.

As shown in FIG. 1A, the solid-insulated device 14 is a molded electric component, for example a vacuum valve.

The solid-insulated device 14 includes a main circuit conductor 7 connected to a main circuit. An insulating layer 8 is formed on the outer circumference of the main circuit conductor 7.

In FIG. 1A, the main circuit conductor 7 branches to branching parts 7a, 7b, and 7c, and a concavity is formed at the end of the branching part 7a. A connecting conductor 3 of the heat releasing device 15 can be connected to the concavity.

Each end of the branching parts 7b, 7c is a projecting conical interface. Electric devices are connected to the interfaces respectively.

The insulating layer 8 at the end of the branching part 7a is hollow conical interface 9, and an interface 5 of the heat releasing device 15 can adhere to it via flexible material.

Except for the interface 9, a grounding layer 10 is formed on the outer circumference of the insulating layer 8. The projection and the hollow of the interfaces 5, 9 may be reversed.

As shown in FIG. 1B and FIG. 1C, the heat releasing device 15 includes a metal part 1a which can be connected to the main circuit of the solid-insulated device 14 shown in FIG. 1A and an insulating part 1b which is formed by molding the metal part 1a with insulating material, for example an epoxy resin. The metal part 1a is made of metal, for example electrolytic copper or aluminum.

The metal part 1a includes a tabular heat releasing plate 2 which has prescribed area, and the columnar connecting conductor 3 fixed to an end face of the heat releasing plate 2.

The longitudinal width and the lateral width of the heat releasing plate 2 are smaller than some parts of the solid-insulated device 14.

The board thickness of the heat releasing plate 2 has mechanical strength to sustain itself, and electric field relief rings may be disposed in the periphery of the heat releasing plate 2 as necessary.

The insulating part 1b includes an insulating layer 4 which is formed by integrally molding the heat releasing plate 2 and a part of the connecting conductor 3.

That is, the whole heat releasing plate 2 is covered with the insulating layer 4. The insulating layer 4 and the insulating layer 8 are made of the same material. The projecting conical interface 5 is formed on opposite side to the heat releasing plate 2, as viewed from the connecting conductor 3. The end of the connecting conductor 3 protrudes from the interface 5.

Except for the interface 5, a grounding layer 6 is formed on the outer circumference of the insulating layer 4 by application of conductive paint. The same conductive paint is used for the grounding layer 6 and the grounding layer 10. The insulating layer 4 has prescribed insulating thickness to resist dielectric strength which is imposed on the solid-insulated device 14.

Although a general epoxy resin may be used as the insulating material, magnesia which has high thermal conductivity may be filled into filler in addition to silica. Preferably, the ratio of the magnesia: the silica is in a range of 50∼85:50∼15.

In the configuration as mentioned above, Electric current which flows through the solid-insulated device 14, for example flows from one electric device into the other electric device via the branching parts 7c, 7b (solid arrow B in FIG. 1).

On the other hand, heat generated by the main circuit is released from the heat releasing plate 2 via the branching part 7a and the connecting conductor 3 (dashed arrow C in FIG. 1).

The heat releasing plate 2 (heat releasing member) can be directly connected to the main circuit of the solid-insulated device 14 by connecting the interface 9 of the solid-insulated device 14 and the interface 5 of the heat releasing device 15. Therefore, the heat radiation efficiency can improve.

That is, since the heat releasing member made of metal with high thermal conductivity is connected to the main circuit of the solid-insulated device 14, it is possible to greatly suppress temperature rise of the solid-insulated device 14.

If the magnesia is filled into the insulating layer 4, the heat radiation efficiency can improve further.

As mentioned above, the longitudinal width and the lateral width of the heat releasing plate 2 are smaller than some parts of the solid-insulated device 14. When the heat releasing device 15 is applied to the switchgear as the solid-insulated device 14, it is not necessary to enlarge the width of the switchgear. That does not buck the tendency of miniaturization.

When the solid-insulated device 14 is used as small-capacity, the heat releasing device 15 may be detached from it. In that case, an insulating plug (not shown) is mounted in the interface 9 of the solid-insulated device 14.

Thus, the heat releasing device 15 can be used according to energizing conditions of the solid-insulated device 14, and contribute to expanding the application of the solid-insulated device 14.

According to the heat releasing device 15 of the first embodiment mentioned above, the heat releasing plate 2 (heat releasing member) can be directly connected to the main circuit of the solid-insulated device 14 by connecting the interface 9 of the solid-insulated device 14 and the interface 5 of the heat releasing device 15. Therefore, it is possible to greatly suppress temperature rise of the molded electric component.

Since the heat releasing device 15 has a function dedicated to heat releasing and is detachable, it can contribute to expanding the scope of application of the solid-insulated device 14.

### Second Embodiment

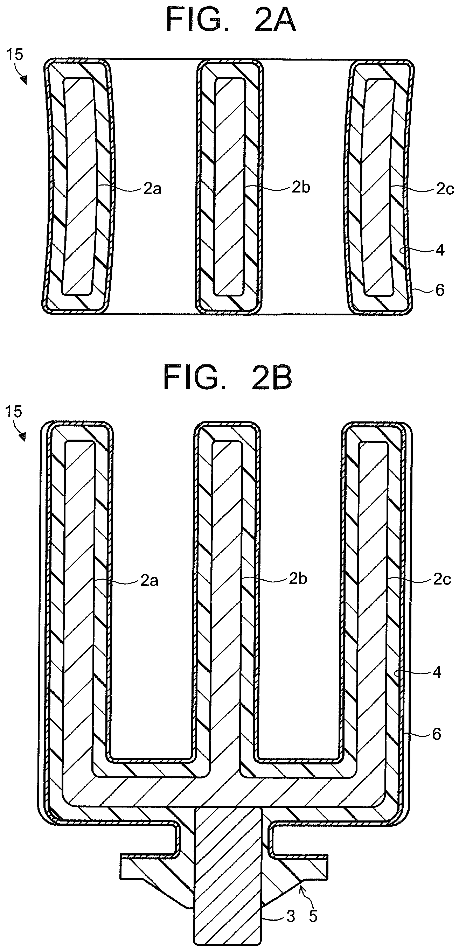

Next, a heat releasing device according to a second embodiment will be described with reference to FIGS. 2A and 2B. FIG. 2A is a top sectional view illustrating a configuration of the heat releasing device according to the second embodiment. FIG. 2B is a front sectional view of FIG. 2A.

The second embodiment differs from the first embodiment in including a plurality of heat releasing plates.

In FIGS. 2A and 2B, the same parts as those of the first embodiment will be designated by like reference symbols with no description made thereon.

As shown in FIGS. 2A and 2B, a plurality of heat releasing plates (heat releasing members) 2a, 2b, 2c is connected to the connecting conductor 3.

The heat releasing plates 2a, 2b, 2c are disposed parallel with each other with prescribed intervals (several millimeters) so that a flow of air wouldn't be disturbed.

If respective both end surfaces of the heat releasing plates 2a, and 2c positioned at both ends are bent outside, the flow of air can improve.

According to the heat releasing device 15 of the second embodiment mentioned above, since the heat releasing area is enlarged, it is possible to suppress the temperature rise of the solid-insulated device 14 further, in addition to the effects obtained in the first embodiment.

### Third Embodiment

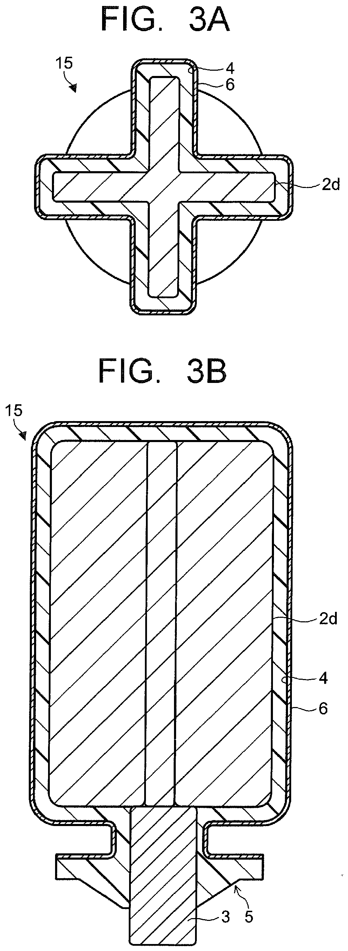

A heat releasing device according to a third embodiment will be described with reference to FIGS. 3A and 3B. FIG. 3A is a top sectional view illustrating a configuration of the heat releasing device according to the third embodiment. FIG. 3B is a front sectional view of FIG. 3A.

The third embodiment differs from the first embodiment in that the heat releasing plate is formed in a cross shape.

In FIGS. 3A and 3B, the same parts as those of the first embodiment will be designated by like reference symbols with no description made thereon.

As shown in FIGS. 2A and 2B, the heat releasing plate (heat releasing member) 2d is formed in a cross shape, as viewed from the upside. The heat releasing plate 2d may be constituted by combining a plurality of plates in a radial shape.

According to the heat releasing device 15 of the third embodiment mentioned above, similar effects to the second embodiment can be obtained.

### Fourth Embodiment

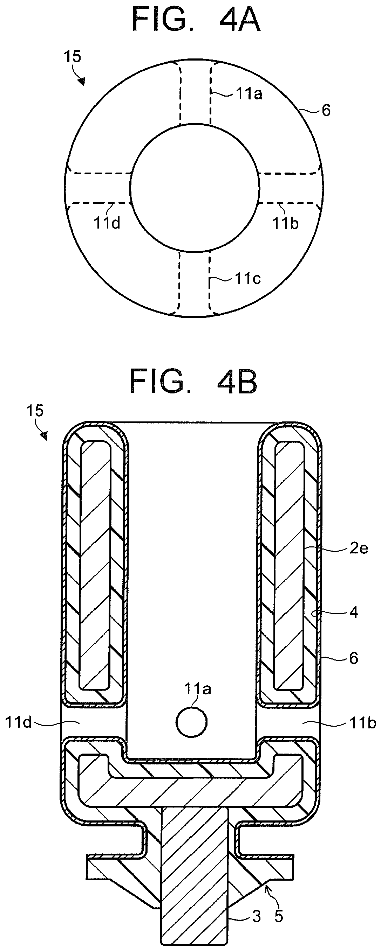

A heat releasing device according to a fourth embodiment will be described with reference to FIGS. 4A and 4B. FIG. 4A is a top sectional view illustrating a configuration of the heat releasing device according to the fourth embodiment. FIG. 4B is a front sectional view of FIG. 4A.

The fourth embodiment differs from the first embodiment in that the heat releasing plate is formed in a cylindrical shape.

In FIGS. 4A and 4B, the same parts as those of the first embodiment will be designated by like reference symbols with no description made thereon.

As shown in FIGS. 4A and 4B, the heat releasing plate (heat releasing member) 2e is formed in a bottomed cylindrical shape, and its surface on the side of the connecting conductor 3 is fixed to the connecting conductor 3.

The opposite side to the connecting conductor 3 of the heat releasing plate 2e is an opening. A plurality of openings 11a, 11b, 11c, and 11 d is formed near the bottom of the cylindrical heat releasing plate 2e in order that the air can flow through it.

According to the heat releasing device 15 of the fourth embodiment mentioned above, similar effects to the third embodiment can be obtained.

### Fifth Embodiment

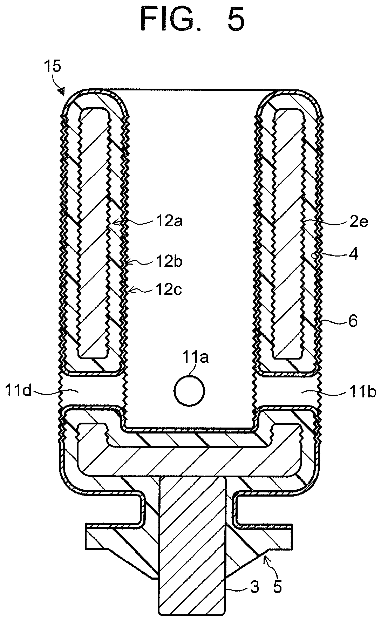

A heat releasing device according to a fourth embodiment will be described with reference to FIG. 5. FIG. 5 is a sectional view illustrating a configuration of the heat releasing device according to the fifth embodiment.

The fifth embodiment differs from the fourth embodiment in that the heat releasing plate and the insulating layer have a wavy shape.

In FIG. 5, the same parts as those of the fourth embodiment will be designated by like reference symbols with no description made thereon.

As shown in FIG. 5, the heat releasing plate (heat releasing member) 2e has a rugged wavy shape 12a on its inner and outer circumference, and the surface area of the heat releasing plate 2e is enlarged.

The insulating layer 4 also has a wavy shape 12b on its inner and outer circumference. Accordingly, the grounding layer 6 also becomes a wavy shape 12c.

At least one of the wavy shape 12a of the heat releasing plate 2e and the wavy shape 12b of the insulating layer 4 is formed. If both of the wavy shapes 12a and 12b are formed, it is preferred that the peaks and valleys of them correspond to each other in the aspect of an electric field.

According to the heat releasing device 15 of the fifth embodiment mentioned above, similar effects to the fourth embodiment can be obtained.

According to the heat releasing device 15 of the embodiments mentioned above, since it can directly remove heat from the main circuit of the solid-insulated device 14 which is a molded electric component, it is possible to greatly suppress the temperature rise.

### EXPLANATION OF REFERENCE NUMERALS

1a: metal part, 1b: insulating part, 2, 2a, 2b, 2c, 2d, 2e: heat releasing plate, 3: connecting conductor, 4, 8: insulating layer, 5, 9: interface, 6, 10: grounding layer, 7: main circuit conductor, 7a, 7b, 7c: branching part, 11a, 11b, 11c, lid: opening, 12a, 12b, 12c: wavy shape, 14: solid-insulated device, 15: heat releasing device

## Claims

1. A heat releasing device (15) for a solid-insulated electrical device (14), transferring heat by conduction, comprising:
a metallic heat releasing member (2, 2a-2e), said heat releasing member having a predetermined area and heat thermal conductivity;
a connecting conductor (3) fixed to the heat releasing member and configured to be directly connected to a main circuit (7) of the solid-insulated device;
an insulating layer (4, 8) formed around the heat releasing member and the connecting conductor.
an interface (5, 9) from which an end of the connecting conductor (3) protrudes and is exposed; and
a grounding layer (6, 10) formed on the outer circumference of the insulating layer (4, 8).

2. The heat releasing device of Claim 1, wherein the heat releasing member comprises a plurality of heat releasing plates (2a, 2b, 2c) disposed at predetermined intervals.

3. The heat releasing device of Claim 1, wherein the heat releasing member comprises a plurality of heat releasing plates (2d) formed in a radial shape.

4. The heat releasing device of Claim 1, wherein the heat releasing member is formed in a bottomed cylindrical shape (2e) and wherein a plurality of openings (11a-11d) are formed near the bottom of said heat releasing member.

5. The heat releasing device of Claim 1, wherein at least one of the heat releasing member and the insulating layer has an undulating or wavy surface (12b).

6. The heat releasing device of Claim 1 wherein the solid-insulating device comprises a vacuum valve or a main circuit conductor of a switchgear.

## Patentansprüche

1. Wärmefreisetzungsvorrichtung (15) für eine feststoffisolierte elektrische Vorrichtung (14), die Wärme durch Konduktion überführt, umfassend:
ein metallisches Wärmefreisetzungselement (2, 2a-2e), wobei das Wärmefreisetzungselement eine vorbestimmte Fläche und thermische Wärmeleitfähigkeit hat;
einen Anschlussleiter (3), der am Wärmefreisetzungselement befestigt ist und konfiguriert ist, um direkt mit einem Hauptstromkreis (7) der feststoffisolierten Vorrichtung verbunden zu sein;
eine Isolierschicht (4, 8), die um das Wärmefreisetzungselement und den Anschlussleiter gebildet ist,
eine Schnittstelle (5, 9), von der ein Ende des Anschlussleiters (3) hervorragt und freiliegt; und
eine Erdungsschicht (6, 10), die am Außenumfang der Isolierschicht (4, 8) gebildet ist.

2. Wärmefreisetzungsvorrichtung nach Anspruch 1, wobei das Wärmefreisetzungselement eine Vielzahl von Wärmefreisetzungsplatten (2a, 2b, 2c) umfasst, die in vorbestimmten Abständen angeordnet sind.

3. Wärmefreisetzungsvorrichtung nach Anspruch 1, wobei das Wärmefreisetzungselement eine Vielzahl von Wärmefreisetzungsplatten (2d) umfasst, die in einer radialen Form gebildet sind.

4. Wärmefreisetzungsvorrichtung nach Anspruch 1, wobei das Wärmefreisetzungselement in einer zylindrischen Form mit Boden (2e) gebildet ist und wobei eine Vielzahl von Öffnungen (11a-11d) nahe dem Boden des Wärmefreisetzungselements gebildet sind.

5. Wärmefreisetzungsvorrichtung nach Anspruch 1, wobei mindestens eines von dem Wärmefreisetzungselement und der Isolierschicht eine wellenförmige oder wellige Oberfläche (12b) aufweist.

6. Wärmefreisetzungsvorrichtung nach Anspruch 1, wobei die feststoffisolierende Vorrichtung ein Vakuumventil oder einen Hauptstromkreisleiter einer Schaltanlage umfasst.

## Revendications

1. Dispositif de libération de chaleur (15) pour un dispositif électrique à isolation solide (14) transférant de la chaleur par conduction, comprenant :
un élément de libération de chaleur métallique (2, 2a-2e), ledit élément de libération de chaleur ayant une surface prédéterminée et une conductivité thermique de chaleur ;
un conducteur de connexion (3) fixé à l'élément de libération de chaleur et configuré pour être directement connecté à un circuit principal (7) du dispositif à isolation solide ;
une couche isolante (4, 8) formée autour de l'élément de libération de chaleur et du conducteur de connexion ;
une interface (5, 9) à partir de laquelle une extrémité du conducteur de connexion (3) fait saillie et est exposée ; et
une couche de mise à la masse (6, 10) formée sur la circonférence extérieure de la couche isolante (4, 8).

2. Dispositif de libération de chaleur selon la revendication 1, dans lequel l'élément de libération de chaleur comprend une pluralité de plaques de libération de chaleur (2a, 2b, 2c) disposées à des intervalles prédéterminés.

3. Dispositif de libération de chaleur selon la revendication 1, dans lequel l'élément de libération de chaleur comprend une pluralité de plaques de libération de chaleur (2d) formées en une forme radiale.

4. Dispositif de libération de chaleur selon la revendication 1, dans lequel l'élément de libération de chaleur est formé en une forme cylindrique à fond (2e) et dans lequel une pluralité d'ouvertures (11a à 11d) sont formées près du fond dudit élément de libération de chaleur.

5. Dispositif de libération de chaleur selon la revendication 1, dans lequel au moins l'un de l'élément de libération de chaleur et de la couche isolante a une surface vallonée ou ondulée (12b).

6. Dispositif de libération de chaleur selon la revendication 1, dans lequel le dispositif à isolation solide comprend une soupape à vide ou un conducteur de circuit principal d'un appareil de commutation.
